# EUROPÄISCHE PATENTSCHRIFT

(11) **EP 1 901 912 B1**
(45) Veröffentlichungstag und Bekanntmachung des Hinweises auf die Patenterteilung: **25.05.2011**
(21) Anmeldenummer: 06721917.0
(22) Anmeldetag: 20.04.2006
(51) Int. Cl.: B29C 70/34, B29C 70/46, B29C 70/08, B29C 70/50, B32B 5/06, B32B 5/26, D04H 13/00, B32B 37/04, B29K 309/08, B29K 23/00, B29K 101/12

(54) **THERMOPLASTISCH VERARBEITBARER VERBUNDWERKSTOFF**
THERMOPLASTICALLY PROCESSABLE COMPOSITE MATERIAL
MATERIAU COMPOSITE POUVANT ETRE TRAITE DE FAÇON THERMOPLASTIQUE

(30) Priorität: 20.04.2005 EP 05008635
(43) Veröffentlichungstag der Anmeldung: 26.03.2008
(73) Patentinhaber: Quadrant Plastic Composites AG, 5600 Lenzburg (CH)
(72) Erfinder: BASER, Burak, CH-5600 Lenzburg (CH)
(74) Vertreter: Schmauder & Partner AG Patent- & Markenanwälte VSP
(86) Internationale Anmeldenummer: PCT/CH2006/000215
(87) Internationale Veröffentlichungsnummer: WO 2006/111037

(56) Entgegenhaltungen:
- EP-A- 0 603 633
- EP-A- 0 802 043
- EP-A- 1 055 759
- EP-A- 1 593 490
- WO-A-00/00351
- WO-A-00/18574
- DE-A1- 19 812 925
- US-A1- 2004 177 911

## Beschreibung

Die Erfindung betrifft einen thermoplastisch verarbeitbaren Verbundwerkstoff, enthaltend mindestens eine Faservliesschicht A aus Thermoplastfasern und eine Gewebeschicht B aus Glasfasern.

Thermoplastische Kunststoffe werden wegen ihres geringen Gewichtes in zunehmendem Maße zur Herstellung von Formteilen, insbesondere von Kraftfahrzeugteilen verwendet. Um ihnen eine ausreichende Festigkeit und Steifigkeit zu verleihen, werden sie gewöhnlich mit Verstärkungsfasern verbunden. So werden z.B. flächige Halbzeuge aus glasmattenverstärkten Thermoplasten ("GMT- Halbzeug") hergestellt durch Zusammenführen von Endlos- Glasfasermatten und Thermoplast-Schmelzebahnen und Konsolidieren auf einer Doppelbandpresse. Diese Arbeitsweise erfordert jedoch einen hohen Energieaufwand, da die zähflüssige Schmelze bei Drücken weit oberhalb von 1 bar in die Matte eingepresst werden muss.

Außerdem sind nach diesem Verfahren in der Praxis nur Halbzeuge und damit auch Fertigteile mit einem Flächengewicht von mehr als 1500 g/m² herstellbar.

In der DE-A 36 14 533 ist ein Verfahren zur Herstellung von Formkörpern aus thermoplastischen Kunststoffen, die eine Verstärkungseinlage enthalten, beschrieben. Dabei wird in Anlehnung an die Textilfasertechnologie ein Mischvlies aus Thermoplastfasern und Verstärkungsfasern nach dem Krempel- oder Airlay-Verfahren hergestellt und durch Nadeln verfestigt. Zuschnitte aus diesem Mischvlies werden erwärmt und direkt zu Formkörpern verpresst. Zwischen zwei er wärmte Zuschnitte kann ein weiteres flächiges Substrat, z.B. ein Gittergewebe oder ein Stoffgewebe aufgelegt und mitverpresst werden. Dabei besteht aber die Gefahr, dass beim Handling, d.h. beim Transport oder beim Einlegen in die Presse, die Lagen verrutschen.

Der Erfindung lag nun die Aufgabe zugrunde, einen thermoplastisch verarbeitbaren Verbundwerkstoff bereitzustellen, der einfach und mit geringem Energieaufwand herstellbar und problemlos handhabbar ist, und der zu einem Halbzeug oder gleich zu Fertigteilen, auch mit geringem Flächengewicht, verarbeitet werden kann.

Diese Aufgabe wird erfindungsgemäß gelöst durch einen thermoplastisch verarbeitbaren, flächigen Verbundwerkstoff, bestehend aus
A. mindestens einer Faservliesschicht aus 10 bis 100 Gew.% Thermoplastfasern und 0 bis 90 Gew.% Verstärkungsfasern mit einem Flächengewicht von 300 bis 2000 g/m²
   und
B. mindestens einer Gewebeschicht aus Verstärkungsfäsern mit einem Flächengewicht von 100 bis 1000 g/m², wobei die Verstärkungsfasern Glasfasern sind, und
wobei die Schichten A und B zusammengenadelt, sind.

Die EP-A 697 275 beschreibt einen biegesteifen, flächigen Faserverbundwerkstoff aus einer Thermoplastmatrix und Verstärkungsfasern, bestehend aus zwei Deckschichten A aus Glasfasergewebe, das in eine Thermoplastmatrix eingebettet ist, und einer Kernschicht B aus der Thermoplastmatrix, die Glasfasern mit ungerichteter Faserorientierung enthalten kann.

Die EP-A 603 633 betrifft einen flammhemmenden Schichtstoff aus
A. einer Schicht eines verfestigten Spinnvlieses,
B. einer Gelegeschicht aus Glasfasern mit einem Flächengewicht von maximal 30 g/m² und
C. einer Metallfolie,
wobei die Schichten durch Nadelung miteinander verbunden sind.

Die Schichtstoffe sollen als Dachbahnen angewandt werden. Sie enthalten zwingend eine Metallfolie als Deckschicht, die bei der vorliegenden Erfindung ausgeschlossen ist. Außerdem hätten Formteile, die aus derartigen Schichtstoffen durch thermoplastisches Umformen hergestellt werden (falls dies überhaupt möglich ist), eine z,B, für den Kraftfahrzeugbereich wegen des niedrigen Flächengewichts des Geleges viel zu geringe Festigkeit und Steifigkeit.

Im Gegensatz zur EP-A 603 633 ist beim erfindungsgemässen Verbundwerkstoff eine Metallfolie nicht erwünscht und schon gar nicht erforderlich.

Die EP 1 593 490 A1 und die DE 20 2004 007 400 U1 beschreiben ein Verfahren Halbzeugs auf Basis eines glasfaserverstärkten thermoplastischen Kunststoffs, wobei man mindestens eine Bahn A aus einem Faservlies mit einem Flächengewicht von 20 bis 200 g/m² auf eine Bahn B aus einem Mischfasergewebe mit einem Flächengewicht von 250 bis 4000 g/m², dessen Faserstränge sowohl in Längs- als auch in Querrichtung aus einer Mischung von Thermoplastfasern und Glasfasern bestehen, bei Temperaturen oberhalb des Erweichungsbereichs des Thermoplasten aufpresst.

Die WO 00/00351 beschreibt ein Verfahren zur Herstellung eines Verbundkörpers, bei weichem mindestens eine Fasermatte mit mindestens einem bahnförmig zugeführten thermoplastischen Kunststoff zusammengeführt und diese Materialien unter Einwirkung von Druck und erhöhter Temperatur miteinander verbunden werden, wobei zwischen einer jeweiligen Fasermatte und einem jeweiligen banhförmigen Kunststoff ein Haftvermittler eingesetzt wird.

Als Thermoplastfasern für die Faservliesschicht A kommen alle verspannbaren thermoplastischen Kunststoffe in Frage, vorzugsweise Polypropylen mit einem MFI (230°C, 2.16 kp) von 25 bis 150 g/10 min, daneben aber auch Polyamide und lineare Polyester, sowie für besondere Anwendungszwecke, z.B. im Flugzeugbau, auch Polysulfone, Polyetherketone und Polyetherimide. Die Thermoplastfasern weisen im allgemeinen eine mittlere Länge von 20 bis 100 mm auf. Die Schicht A besteht vorzugsweise zu 100% aus Thermoplastfasern, es sind jedoch auch Mischvliese mit bis zu 90 Gew.%, insbesondere mit 40 bis 70 Gew.% Verstärkungsfasern geeignet. Bevorzugte Verstärkungsfasern sind Glasfasern, daneben sind aber auch Naturfasern, Aramidfasern und Fasern aus höher schmelzenden Polymeren geeignet. Die Verstärkungsfasern in der Schicht A weisen im allgemeinen eine mittlere Länge von 20 bis 200 mm auf. Damit sie gut mit den Thermoplastfasern mischbar sind, sollten sie als individuelle, nicht gebundene Fasern vorliegen. Das Faservlies der Schicht A wird nach dem Krempel- oder Airlay- Verfahren hergestellt. Dabei entsteht ein reines Thermoplastfaservlies oder ein Mischfaservlies mit einem Flächengewicht von 300 bis 2000 g/m², vorzugsweise von 300 bis 1000 g/m².

Die Schicht B ist vorzugsweise ein textiles Gewebe, z.B. ein Leinengewebe, ein Köpergewebe oder ein Drehergewebe. Die Verstärkungsfasern sind Glasfasem. Die Fasern des textilen Gewebes liegen vorzugsweise als Faserbündel mit einem Titer zwischen 30 und 3000 tex vor. Es können sowohl Direkt- als auch assemblierte Rovings eingesetzt werden. Assemblierte Rovings haben den Vorteil dass die Titer der einzelnen Bündel zwischen 40 und 180 tex liegen können. Die Schicht B hat ein Flächengewicht von 100 bis 1000 g/m², vorzugsweise von 200 bis 800 g/m².

Die bevorzugte Schichtenfolge ist A - B - A, wobei die beiden Schichten A auch verschieden dick sein können. Daneben sind z.B. auch die Schichtenfolgen A - B, und A-B-A-B-A möglich.

Wesentlich ist, dass die Schichten A und B miteinander vernadelt sind, damit beim Transport und bei der späteren Weiterverarbeitung die Lagen nicht verrutschen und beim Einlegen in die Pressform nur eine einzige Lage eingelegt werden muss. Außerdem werden durch das Nadeln die Faserbündel der Schicht B geöffnet, so dass beim Heißverpressen des Verbundwerkstoffs eine bessere Tränkung mit der Thermoplastschmelze den Schicht A erfolgen kann. Das Nadeln kann auf üblichen Nadelstühlen mit Filznadeln vorgenommen werden.

Zur Herstellung der erfindungsgemäßen Verbundwerkstoffe wird zunächst die Faservliesschicht A nach dem Krempel- oder Airlay- Verfahren hergestellt, wobei ein endloses Band erhalten wird. Die Schicht A wird dann kontinuierlich mit der Schicht B zusammengeführt und zusammengenadelt wobei entweder zwischen zwei Lagen A eine Lage B eingeführt wird oder je eine Lage A und eine Lage B zusammengeführt werden. Zur Herstellung der Schichtenfolge A - B kann auch die Faserschicht B vor dem Nadeln auf dem Krempel- bzw. Airlay-Vlies abgelegt und anschließend mit diesem zusammengenadelt werden.

Die Verbundwerkstoffe können direkt zu dreidimensionalen Fertigteilen in einer Form bei Temperaturen oberhalb des Erweichungspunktes des Thermoplasten verpresst werden. Man kann aber auch ein Halbzeug herstellen, indem der Verbundwerkstoff kontinuierlich durch Heißverpressen konsolidiert wird. Dies wird vorzugsweise auf einer Doppelbandpresse durchgeführt; man kann aber auch einen Kalander oder eine Kaschiereinrichtung verwenden. Das Halbzeug weist vorzugsweise eine Dicke von 0,5 bis 5,0, insbesondere von 9,0 bis 2,0 mm und ein Flächengewicht von 200 bis 3000, insbesondere von 300 bis 1500 g/m² auf. Es kann gelagert, transportiert und bei Bedarf zu Fertigteilen weiterverarbeitet werden. Man kann dieses Halbzeug oder auch direkt den erfindungsgemäßen unkonsolidierten Verbundwerkstoff als Decklagen mit leichten Kernlagen, z.B. aus Polypropylenschaumstoff- oder Honigwaben- Platten zu Sandwichteilen verbinden, entweder durch Verkleben oder durch Heißverpressen. Ferner ist es möglich, das Halbzeug mit GMT- oder LFT- Halbzeug zu verbinden.

Die aus den erfindungsgemäßen Verbundwerkstoffen hergestellten Fertigteile zeichnen sich durch eine hohe Festigkeit und Steifigkeit, sowie durch ein geringes Gewicht aus. Sie finden bevorzugt im Kraftfahrzeugbereich Verwendung, z.B. als Verstärkung für Reserveradmulden, Rückwandtüren, Stoßfänger oder Unterböden. Sandwichteile sind besonders leicht und hochsteif. Sie können z.B. als Ladeböden in Lastkraftwagen verwendet werden. Weitere Anwendungsmöglichkeiten sind z.B. für Sportartikel, im Eisenbahnwaggonbau und im Flugzeugbau.

## Patentansprüche

1. Thermoplastisch verarbeitbarer, flächiger Verbundwerkstoff, **dadurch gekennzeichnet, dass** er besteht aus:
A. mindestens einer Faservliesschicht aus 10 bis 100 Gew.% Thermoplastfasern und 0 bis 90 Gew.% Verstärkungsfasern mit einem Flächengewicht von 300 bis 2000 g/m²
und
B. mindestens einer Gewebeschicht aus Verstärkungsfasern mit einem Flächengewicht von 100 bis 1000 g/m²,
wobei
- die Verstärkungsfasern Glasfasern sind, und
- die Schichten A und R zusammengenadelt sind.

2. Verbundwerkstoff nach Anspruch 1, **gekennzeichnet durch** die SchichtenfolgenA-B-A, A-Boder A-B-A-B-A.

3. Verbundwerkstoff nach Anspruch 1, **dadurch gekennzeichnet, dass** die raservliesschicht zu 100% aus Thermoplasttasern besteht.

4. Verbundwerkstoff nach Anspruch 1, **dadurch gekennzeichnet, dass** die Faservliesschicht zu 30 bis 60 Gew.% aus Thermoplastfasern und zu 70 bis 40 Gew.% aus Verstärkungsfasern besteht.

5. Verbundwerkstoff nach Anspruch 1, **dadurch gekennzeichnet, dass** die Thermoplastfasern Polypropylenfasern sind.

6. Verfahren zu Herstellung des Verbundwerkstoffs nach Anspruch 1, **dadurch gekennzeichnet, dass** zunächst die Faservliesschicht A nach dem Krempel- oder Airlay- Verfahren hergestellt wird, und dass dann kontinuierlich eine Gewebeschicht B mit einer oder zwei Schichten A zusammengeführt und zusammengenadelt wird.

7. Verwendung des Verbundwerkstoffs nach Anspruch 1, zur Herstellung von Fertigteilen durch Heißverpressen in einer Form.

8. Verwendung des Verbundwerkstoffs nach Anspruch 1 zur Herstellung eines flächigen Halbzeugs einer Dicke von 0,5 bis 5,0 mm durch Heißverpressen in einer Doppelbandpresse.

9. Verwendung des Verbundwerkstoffs nach Anspruch 1 als Decklage zur Herstellung von Sandwichteilen durch Verkleben oder Heißverpressen mit Thermoplast- Schaumstoffplatten oder Honigwaben- Platten als Kernlage.

## Claims

1. A thermoplastically processable, flat composite material, **characterized in that** it consists of:
A. at least one nonwoven layer comprising 10 to 100 wt.-% thermoplastic fibers and 0 to 90 wt.-% reinforcing fibers with an areal weight of 300 to 2000 g/m²
and
B. at least one woven fabric of reinforcing fibers with an areal weight of 100 to 1000 g/m²,
wherein
- the reinforcing fibers are glass-fibers, and
- the layers A and B are needled together.

2. The composite material according to claim 1, **characterized in that** the layer sequence is A-B-A,A-B or A-B-A-B-A.

3. The composite material according to claim 1, **characterized in that** the nonwoven layer consists of 100% of thermoplastic fibers.

4. The composite material according to claim 1, **characterized in that** the nonwoven layer consists of 30 to 60 wt.-% of thermoplastic fibers and of 70 to 40 wt.-% of reinforcing fibers.

5. The composite material according to claim 1, **characterized in that** the thermoplastic fibers are polypropylene fibers.

6. A method for producing the composite material according to claim 1, **characterized in that** initially the nonwoven layer A is produced according to the carding or airlay process, and that subsequently a woven fabric layer B is continuously merged and needled together with one or two layers A.

7. Use of the composite material according to claim 1 for producing finished parts by means of heat pressing in a mold.

8. Use of the composite material according to claim 1 for producing a flat semifinished product with a thickness of 0,5 to 5,0 mm by means of heat pressing in a double band press.

9. Use of the composite material according to claim 1 as a cover layer for producing sandwich parts by means of gluing or heat pressing with thermoplastic foamed plastic sheets or honeycomb sheets as a core layer.

## Revendications

1. Matériau composite, plat, utilisable de façon thermoplastique,
**caractérisé en ce qu'**
il se compose de :
A. au moins une couche de fibres non tissées comprenant de 10 à 100 % en poids de fibres thermoplastiques et de 0 à 90 % en poids de fibres de renforcement ayant un poids surfacique de 300 à 2000 g/m², et
B. au moins une couche tissée en fibres de renforcement ayant un poids surfacique de 100-1000 g/m², et
- les fibres de renforcement sont des fibres de verre, et
- les couches A et B sont réunies par aiguilletage.

2. Matériau composite selon la revendication 1,
**caractérisé en ce que**
les couches se succèdent dans l'ordre suivant : A-B-A ; A-B ou A-B-A-B-A.

3. Matériau composite selon la revendication 1,
**caractérisé en ce que**
la couche de fibres non tissées se compose de 100 % de fibres thermoplastiques.

4. Matériau composite selon la revendication 1,
**caractérisé en ce que**
la couche de fibres non tissées se compose de 30 à 60 % en poids de fibres thermoplastiques et de 70 à 40 % en poids de fibres de renforcement.

5. Matériau composite selon la revendication 1,
**caractérisé en ce que**
les fibres thermoplastiques sont des fibres de polypropylène.

6. Procédé de fabrication du matériau composite de la revendication 1,
**caractérisé en ce qu'**
on réalise tout d'abord la couche de fibres non tissées A par un procédé de cardage ou de couches pneumatiques et on réunit en continu une couche tissée B avec une ou deux couches A et on assemble par aiguilletage.

7. Utilisation du matériau composite selon la revendication 1, pour réaliser des pièces finies par pressage à chaud dans un moule.

8. Utilisation du matériau composite selon la revendication 1, pour réaliser un produit semi-fini plat d'une épaisseur de 0,5 à 5 mm par pressage à chaud dans une presse à double bande.

9. Utilisation du matériau composite selon la revendication 1, comme couche de couverture pour la fabrication de pièces sandwich par collage ou pressage à chaud avec des plaques de matière expansée thermoplastique ou des plaques en nids d'abeilles comme couches centrales.
